# EUROPEAN PATENT APPLICATION

(11) **EP 1 032 140 A2**
(43) Date of publication of application: **30.08.2000**
(21) Application number: 00103533.6
(22) Date of filing: 18.02.2000
(51) Int. Cl.: H04B 7/005

(54) **Base station apparatus, mobile station apparatus and radio communication method for transmission power control**

(30) Priority: 23.02.1999 JP 4468699
(71) Applicant: Matsushita Electric Industrial Co., Ltd., Kadoma-shi, Osaka-fu, 571-8501 (JP)
(72) Inventor: Kitade, Takashi, Yokosuka-shi, Kanagawa 239-0847 (JP); Miya, Kazuyuki, Kawasaki-shi, Kanagawa 215-0021 (JP)
(74) Representative: Grünecker, Kinkeldey, Stockmair & Schwanhäusser Anwaltssozietät

(57) **Abstract**

A demodulated transmission power control command (TPC command) is input to transmission power control section 104. Transmission power control section 104 responds to the TPC command using a time constant determined by response time constant determination section 105. Transmission power control section 104 determines a transmission power value to control transmission power amplification section 108 according to this response time constant. Response time constant determination section 105 determines the response time constant for transmission power control according to the setting condition set by applied environment setting section 109 according to the environment in which the base station is installed (for example, indoors or outdoors). Applied environment setting section 109 outputs the information of the environment in which the base station is installed to response time constant determination section 105.

## Description

### BACKGROUND OF THE INVENTION

### Field of the Invention

The present invention relates to a base station apparatus, mobile station apparatus and radio communication method carrying out closed-loop type transmission power control in a digital radio communication system.

### Description of the Related Art

There are various access systems for radio communications such as FDMA (Frequency Division Multiple Access), TDMA (Time Division Multiple Access) and CDMA (Code Division Multiple Access). CDMA is an access system in which a same frequency or same time is shared by a plurality of users. Therefore, if a desired transmission station is far and an undesired interference station is near and if both stations perform transmission with same power, the signal level from the interference station is higher than the signal level of the desired transmission station, causing a problem of disabling communications. For this reason, a cellular system using CDMA tries to solve this problem by controlling transmission power through the uplink channel from a mobile station to a base station so that the reception level at the base station becomes equal to that at the mobile station. This control is generally called "transmission power control."

In terrestrial mobile communications, one of causes for deterioration of the channel quality is fading. On a transmission path in a terrestrial mobile communication, a signal transmitted from the base station is reflected, scattered or diffracted by buildings around the mobile station, generating a standing wave. When the mobile station moves amidst of this standing wave, the signal level from the base station drops in proportion to the moving speed, deteriorating the reception quality. The phenomenon of this signal level dropping is called "fading." To cope with this, controlling the transmission power of the base station so that the signal level transmitted from the base station becomes constant at the mobile station can compensate fading variations and improve the channel quality. A typical method for transmission power control is closed-loop type control.

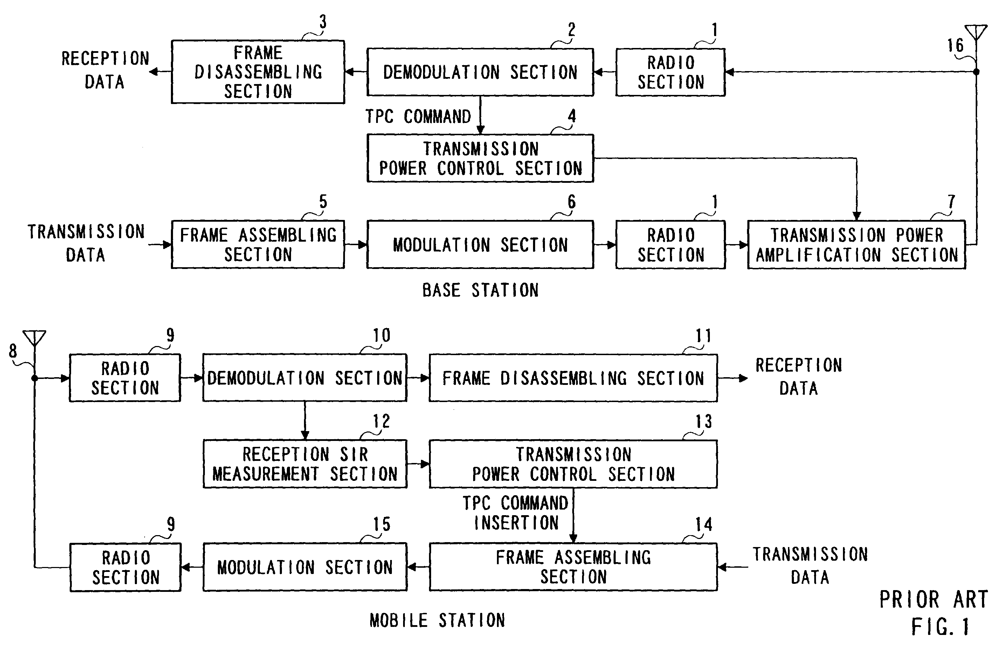

A conventional method of applying this closed-loop technology to a downlink channel (transmission from the base station to the mobile station) is explained using FIG.1.

FIG.1 is block diagram showing configurations of a base station and a mobile station, which is a communication terminal apparatus, in a conventional radio communication system.

In the radio communication system shown in FIG.1, a signal transmitted from the base station is received by antenna 8 of the mobile station and this RF signal is converted to a baseband signal by radio section 9 and further demodulated by demodulation section 10. The demodulated data is frame-disassembled by frame disassembling section 11 and becomes reception data.

Regarding the demodulated data, reception SIR measurement section 12 measures the SIR corresponding to the reception quality. This SIR measurement result is input to transmission power control section 13 and compared with a target SIR value. In this case, if the measured SIR value is larger than the target SIR value, a control command to "decrease" transmission power is output to the mobile station and if the measured SIR value is smaller than the target SIR value, a control command to "increase" transmission power is output to the mobile station. This control command (TPC command) is inserted into the transmission data by frame assembling section 14 and embedded into the uplink channel. This transmission data is modulated by modulation section 15, converted to an RF signal by radio section 9 and transmitted via antenna 8.

This uplink channel signal is received by the base station via antenna 16, converted to a baseband signal by radio section 1 and demodulated by demodulation section 2. The demodulated data is frame-disassembled by frame disassembling section 3 and becomes reception data.

The demodulated transmission power control command (TPC command) is input to transmission power control section 4 and its current transmission power is changed by a predetermined control step (e.g., 1 dB) in a predetermined control cycle. A transmission signal is amplified by transmission power amplification section 7 so as to reach the power level determined by the transmission power control section. The transmission data is assembled into frames by frame assembling section 5, modulated by modulation section 6, converted to an RF signal by radio section 1 and transmitted as a downlink channel signal via antenna 16.

However, the aforementioned conventional transmission/reception apparatus performs control using a predetermined control step and control cycle on the control commands to increase/decrease transmission power. That is, the conventional transmission/reception apparatus carries out transmission power control with a response time constant always fixed in all kinds of environment. Therefore, it is not always the case that transmission power control most suitable for the environment applied is carried out. For example, increasing/decreasing transmission power at short intervals when there is little movement may contrarily result in deterioration of the communication quality.

### SUMMARY OF THE INVENTION

It is an objective of the present invention to provide a base station apparatus, mobile station apparatus, and radio communication method capable of performing closed-loop type transmission power control with a response time constant suited to an environment applied.

This objective is achieved by a base station apparatus, mobile station apparatus and radio communication method that carry out optimum transmission power control by allowing a transmission/reception apparatus on either side whose installation environment does not change to determine a time constant of transmission power control according to the installation environment.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing a configuration of a conventional radio communication system;
FIG.2 is a block diagram showing a configuration of a radio communication system comprising a base station apparatus according to Embodiment 1 of the present invention;
FIG.3 is a block diagram showing a configuration of a base station apparatus according to Embodiment 2 of the present invention;
FIG.4A is a diagram showing slot assignment according to a TDMA/TDD system;
FIG.4B is another diagram showing slot assignment according to a TDMA/TDD system;
FIG.5 is a block diagram showing a configuration of a base station apparatus according to Embodiment 3 of the present invention;
FIG.6 is a block diagram showing a configuration of a base station apparatus according to Embodiment 4 of the present invention;
FIG.7 is a block diagram showing a configuration of a base station apparatus according to Embodiment 5 of the present invention;
FIG.8 is a block diagram showing a configuration of a mobile station apparatus according to Embodiment 5 of the present invention;
FIG.9 is a block diagram showing an internal configuration of a transmission power control section of the mobile station apparatus according to Embodiment 5 of the present invention;
FIG.10 is a block diagram showing another example of the internal configuration of the transmission power control section of the mobile station apparatus according to Embodiment 5 of the present invention,
FIG.11 is a block diagram showing a configuration of a base station apparatus according to Embodiment 6 of the present invention;
FIG.12 is a block diagram showing a configuration of a mobile station apparatus according to Embodiment 6 of the present invention, and
FIG.13 is a block diagram showing an internal configuration of a response time constant determination section of the mobile station apparatus according to Embodiment 6 of the present invention.

### DETAILED DESCRIPTION OF THE PREFERRED EMBODIMENTS

With reference now to the attached drawings, the embodiments of the present invention are explained in detail below.

### (Embodiment 1)

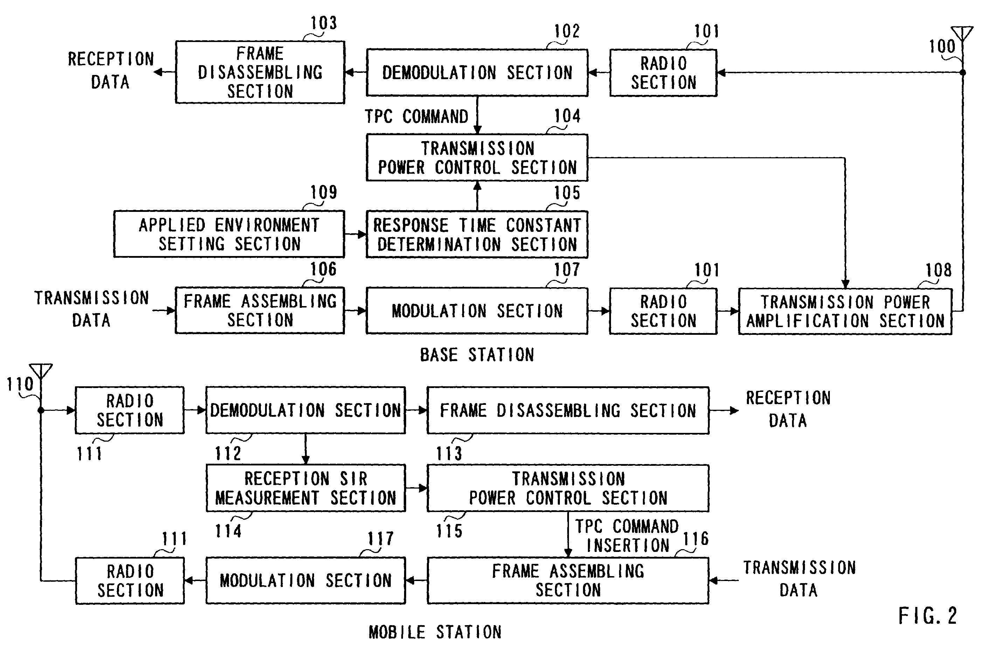

FIG.2 is a block diagram showing a configuration of a radio communication system comprising a base station apparatus according to Embodiment 1 of the present invention.

The base station shown in FIG.2 mainly comprises antenna 100 that transmits/receives a radio frequency signal (RF signal), radio section 101 that converts an RF signal to a baseband signal or converts a baseband signal to an RF signal, demodulation section 102 that demodulates a modulated signal, transmission power control section 104 that determines the transmission power of the base station from a demodulated transmission power control command (TPC command), frame disassembling section 103 that disassembles frames of demodulated data, transmission power amplification section 108 that changes a transmission power value, applied environment setting section 109 that sets an applied environment according to the environment in which the base station is installed (e.g., indoors or outdoors), response time constant determination section 105 that determines a response time constant for transmission power control from the applied environment set value that has been set, frame assembling section 106 that assembles the transmission data into frames and modulation section 107 that modulates this transmission data.

The mobile station apparatus, which is a communication terminal apparatus, mainly comprises antenna 110 that transmits/receives an RF signal, radio section 111 that converts an RF signal to a baseband signal or converts a baseband signal to an RF signal, demodulation section 112 that demodulates a modulated signal, frame disassembling section 113 that disassembles frames of the demodulated data, reception SIR measurement section 114 that measures an SIR (signal to interference ratio) from the demodulated data as the reception quality, transmission power control section 115 that determines a TPC command for the downlink channel from the reception SIR, frame assembling section 116 that assembles transmission data and modulation section 117 that modulates this transmission data.

The operation of the radio communication system in such a configuration is explained below. A signal transmitted from the base station is received by antenna 110 of the mobile station and this RF signal is converted to a baseband signal by radio section 111 and further demodulated by demodulation section 112. The demodulated data is frame-disassembled by frame disassembling section 113 and becomes reception data.

Regarding the demodulated data, an SIR corresponding to the reception quality is measured by reception SIR measurement section 114. This SIR measurement result is input to transmission power control section 115 and compared with the target SIR value. In this case, if the measured SIR value is larger than the target SIR value, a control command to "decrease" transmission power is output to the mobile station and if the measured SIR value is smaller than the target SIR value, a control command to "increase" transmission power is output to the mobile station.

This control command (TPC command) is inserted into the transmission data by frame assembling section 116 and embedded into the uplink channel. This transmission data is modulated by modulation section 117, converted to an RF signal by radio section 111 and transmitted via antenna 110.

This uplink channel signal is received by the base station via antenna 100, converted to a baseband signal by radio section 101 and demodulated by demodulation section 102. The demodulated data is frame-disassembled by frame disassembling section 103 and becomes reception data.

The demodulated transmission power control command (TPC command) is input to transmission power control section 104. Transmission power control section 104 responds to the TPC command with a time constant determined by response time constant determination section 105. Here, the time constant refers to a control step that is the unit by which transmission power is increased/decreased (e.g., dB) by each transmission power control or a control cycle, which is the frequency at which a TPC command included in the signal received through the uplink channel is responded. Transmission power control section 104 determines a transmission power value to control transmission power amplification section 108 according to this response time constant.

Response time constant determination section 105 determines a response time constant for transmission power control according to the setting condition set by applied environment setting section 109 according to the environment in which the base station is installed (e.g., indoors or outdoors). Applied environment setting section 109 outputs the information of the environment in which the base station is installed to response time constant determination section 105.

Applied environment setting section 109 comprises, for example, a switch to switch a plurality of modes and switches the mode according to the installation environment of the base station. For example, applied environment setting section 109 switches between the indoor mode and the outdoor mode. The indoor and outdoor modes can further be divided into more detailed modes according to the installation environment. How to determine the installation environment will be described later.

Therefore, applied environment setting section 109 switches the mode for the applied response time constant according to the environment in which the base station is installed. This setting mode (applied environment) information is sent to response time constant determination section 105 and response time constant determination section 105 determines a response time constant according to the setting mode information. For example, the response time constant is determined in such a form that a transmission power control command is immediately responded or responded after several other transmission power control commands are observed. More specifically, the frequency of responding to a transmission power control command, etc. is determined. Moreover, response time constant determination section 105 also determines a response time constant for a control step (the unit by which transmission power is increased/decreased by each transmission power control, 1 dB, for example). This allows the response time constant to be variable according to once every how many times transmission control commands are sent from the mobile station and how much transmission power is increased/decreased.

On the other hand, the transmission signal is amplified by transmission power amplification section 108 so as to reach the power level determined by the transmission power control section. The transmission data is assembled into frames by frame assembling section 106, modulated by modulation section 107, converted to an RF signal by radio section 101 and transmitted as a downlink channel signal via antenna 100.

As shown above, the base station apparatus of the present embodiment allows the base station installing side to make variable a response time constant for a transmission power control command according to the installation environment, and thus can perform closed-loop type transmission power control under the conditions most suitable for the applied environment without changing the method of determining a transmission power control command by the transmission/reception apparatus of the other end of communication.

### (Embodiment 2)

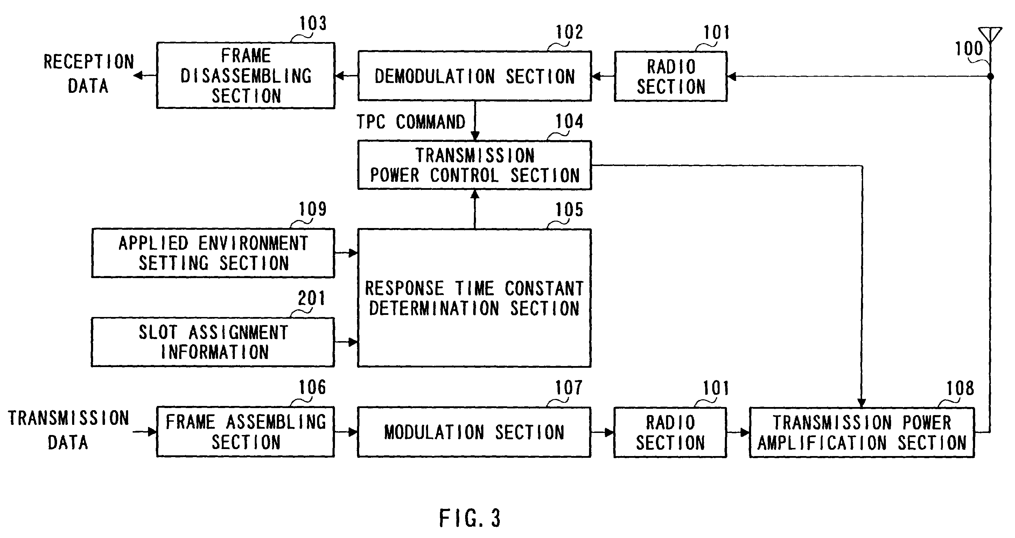

FIG.3 is a block diagram showing a configuration of a base station apparatus according to Embodiment 2 of the present invention. The radio communication system of the present embodiment assumes TDMA. In FIG.3, the parts with the same configuration as that of the base station shown in FIG.2 are assigned the same codes as those in FIG.2 and their explanations are omitted.

The base station according to the present embodiment determines a response time constant by also including slot assignment information. Therefore, in addition to the setting mode information set by applied environment setting section 109, slot assignment information 201 is input to response time constant determination section 105.

In the base station according to the present embodiment, an uplink channel signal is received by the base station via antenna 100, converted to a baseband signal by radio section 101 and demodulated by demodulation section 102. The demodulated data is frame-disassembled by frame disassembling section 103 and becomes reception data.

The demodulated transmission power control command (TPC command) is input to transmission power control section 104. Transmission power control section 104 responds to the TPC command with the time constant determined by response time constant determination section 105. Therefore, transmission power control section 104 determines the transmission power value to control transmission power amplification section 108 based on this response time constant.

At this time, applied environment setting section 109 performs settings according to the installation environment of the base station, and inputs the settings to response time constant determination section 105. Moreover, slot assignment information 201 in communication is also input to response time constant determination section 105.

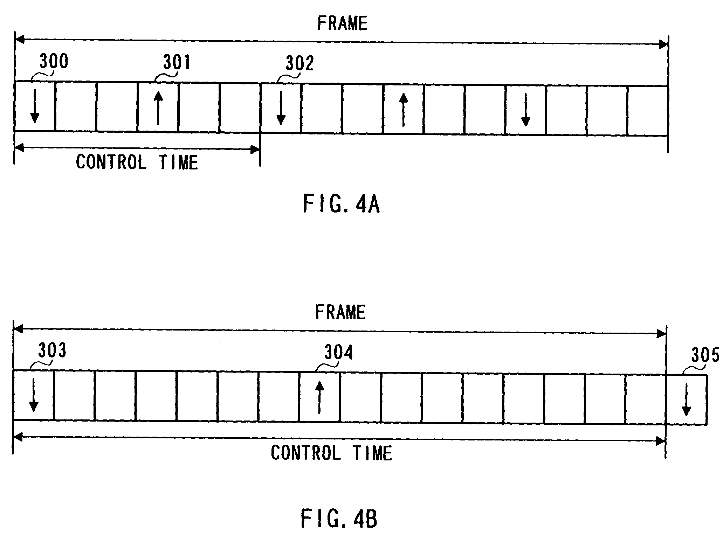

FIG.4A and FIG.4B show slot assignment examples according to a TDMA/TDD system. The cycle of transmission power control of the downlink channel is determined by the positions of the assigned slots of the downlink channel, uplink channel and downlink channel (300, 301, 302, or 303, 304 and 305), and therefore the cycle of transmission power control of the downlink channel is known from this slot assignment information. Therefore, this slot assignment information is input to response time constant determination section 105 and the response time constant for transmission power control is determined from the installation environment and the cycle of downlink transmission power control. Then, transmission power control of the downlink channel is performed using this response time constant as in the case of Embodiment 1.

On the other hand, the transmission signal is amplified by transmission power amplification section 108 so as to reach the power level determined by the transmission power control section. The transmission data is assembled into frames by frame assembling section 106, modulated by modulation section 107, converted to an RF signal by radio section 101 and transmitted as a downlink channel signal via antenna 100.

As shown above, the base station apparatus of the present embodiment allows a response time constant for a transmission power control command to be variable according to the installation environment and the cycle of transmission power control of the downlink channel, and thus can perform closed-loop type transmission power control under the conditions most suitable for the applied environment even if communication slots are assigned in various patterns by DCA (Dynamic Channel Assign) used in the TDMA system.

### (Embodiment 3)

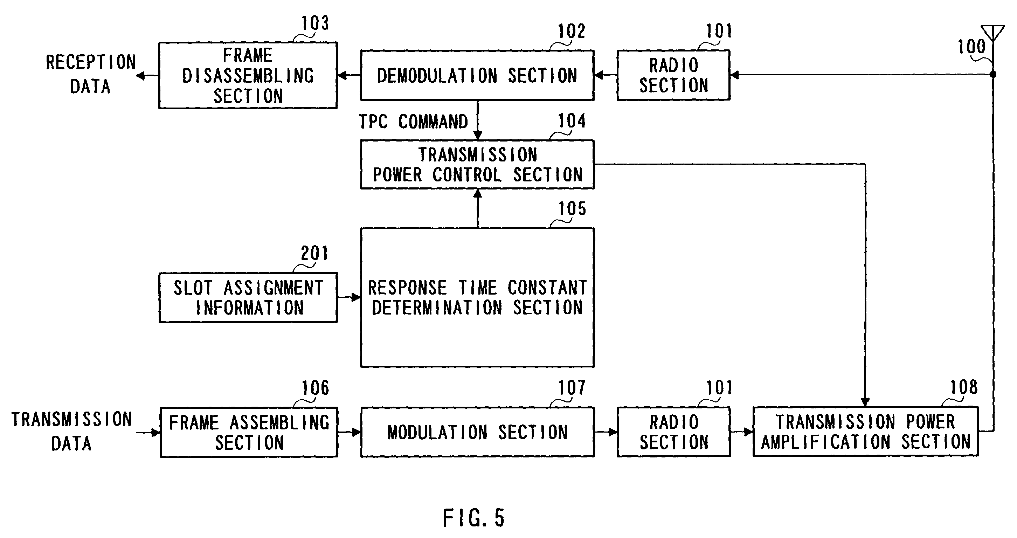

FIG.5 is a block diagram showing a configuration of a base station apparatus according to Embodiment 3 of the present invention. The radio communication system of the present embodiment assumes TDMA. In FIG.5, the parts with the same configuration as that of the base station shown in FIG.3 are assigned the same codes as those in FIG.3 and their explanations are omitted.

The base station according to the present embodiment uses only slot assignment information to determine a response time constant. Therefore, slot assignment information 201 is input to response time constant determination section 105. This slot assignment information is set by the base station according to the resource control situation at the base station, and therefore can easily be input to response time constant determination section 105.

That is, transmission power control section 104 responds to a TPC command using a response time constant determined based on slot assignment information 201 in communication. Since slot assignment information 201 is directly related to the response time constant, it is also possible to determine the response time constant using only this information.

As shown above, the base station apparatus according to the present embodiment allows a response time constant for the transmission power control command to be variable according to the installation environment and the cycle of transmission power control of the downlink channel, and therefore can perform closed-loop type transmission power control under the conditions most suitable for the applied environment even when communication slots are assigned with various patterns according to the DCA (Dynamic Channel Assign), etc. used in the TDMA system.

### (Embodiment 4)

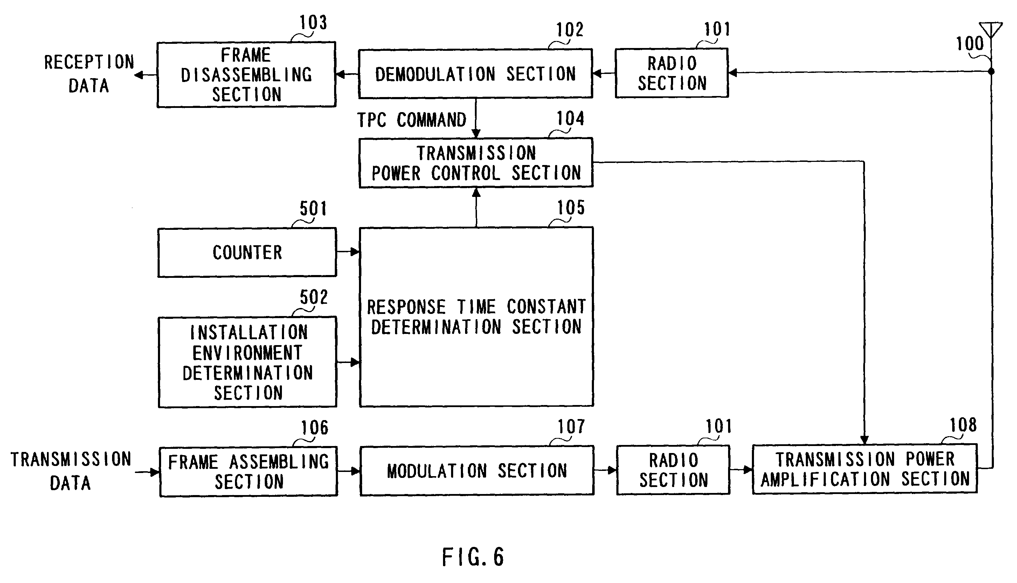

FIG.6 is a block diagram showing a configuration of a base station apparatus according to Embodiment 4 of the present invention. In FIG.6, the parts with the same configuration as that of the base station shown in FIG.3 are assigned the same codes as those in FIG.3 and their explanations are omitted.

The present embodiment monitors a transmission power control command, that is, the situation of the command to increase/decrease transmission power, determines the installation environment from that situation and determines a response time constant based on the determination result.

In the base station of the present embodiment, the uplink channel signal is received by the base station via antenna 100, converted to a baseband signal by radio section 101 and demodulated by demodulation section 102. The demodulated data is frame-disassembled by frame disassembling section 103 and becomes reception data.

The demodulated transmission power control command (TPC command) is input to transmission power control section 104 and at the same time input to counter 501 and counted up for every type of power control command (increasing/decreasing). The type of transmission power control command can be set as appropriate according to the number of transmission power control bits.

Transmission power control section 104 responds to the TPC command using the time constant determined by response time constant determination section 105. Thus, transmission power control section 104 determines a transmission power value to control transmission power amplification section 108 based on this response time constant.

Counter 501 measures the number of transmission power control commands for a predetermined unit time and sends the result to installation environment determination section 502. Installation environment determination section 502 determines the installation environment of the base station based on the result of measurement of the number of transmission power control commands. For example, if "increase" or "decrease" commands are detected consecutively, the installation environment can be regarded as an environment with a transmission path that changes slowly.

This determination result is input to response time constant determination section 105. Then, the response time constant for transmission power control is determined based on this determination result. Transmission power control of the downlink channel is performed using this response time constant as in the case of Embodiment 1.

On the other hand, the transmission signal is amplified by transmission power amplification section 108 so as to reach the power level determined by the transmission power control section. The transmission data is assembled into frames by frame assembling section 106, modulated by modulation section 107, converted to an RF signal by radio section 101 and transmitted as a downlink channel signal via antenna 100.

As shown above, the base station apparatus according to the present embodiment determines the installation environment from the transmission power control command and allows the response time constant for the transmission power control command to be variable based on this, and thus can automatically perform optimal transmission power control.

The embodiment above describes a base station apparatus, but the present invention can also apply the embodiment above to a fixed communication terminal apparatus such as a personal computer on condition that the environment is not changed.

Embodiments 2 and 3 above describe a TDMA-based system, but the present invention can also be implemented with a CDMA-based or OFDM-based user channel multiplexed with the TDMA slot.

### (Embodiment 5)

The above embodiments describe the case that a base station side controls the response time constant, and this embodiment describes the case that a mobile station side controls the response time constant.

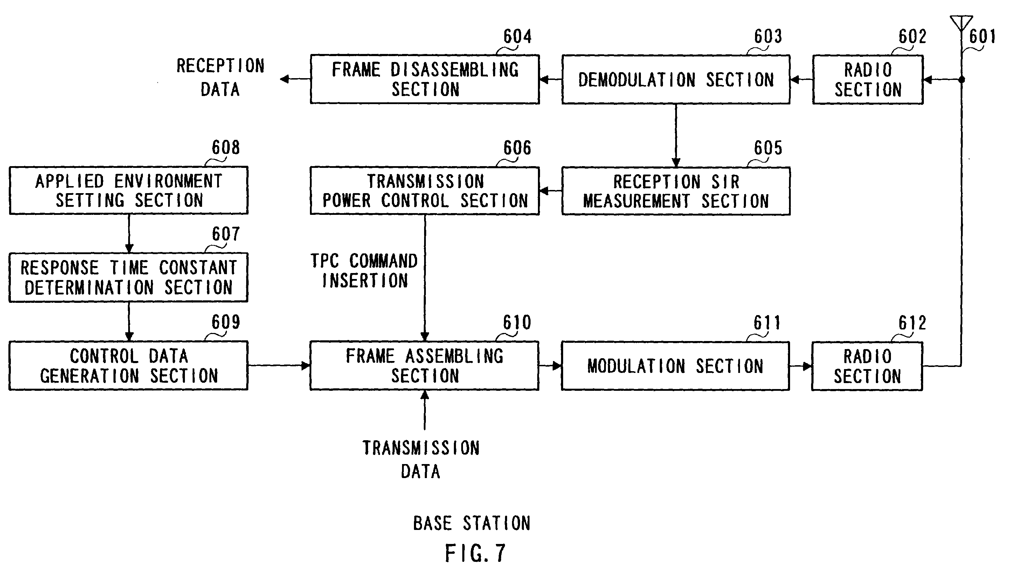

In the base station shown in FIG.7, a radio frequency signal (RF signal) is received via antenna 601, and output to radio section 602. The RF signal is converted to a baseband signal by radio section 602. The baseband signal is demodulated by demodulation section 603, and output to frame disassembling section 604. Received data is obtained from the demodulated signal in frame disassembling section 604.

The demodulated signal is input to reception SIR measurement section 605, and reception SIR (Signal to Interference Ratio) is obtained therein. The obtained reception SIR is output to transmission power control section 606. In transmission power control section 606, the reception SIR is compared with a predetemined reference SIR, and based on the compared result, transmission power control bit (TPC command) is generated. The TPC command is output to frame assembling section 610.

Applied environment setting section 608 sets an applied environment according to the environment in which the base station is installed (e.g., indoors or outdoors), and outputs the applied environment information (applied environment set value) to response time constant determination section 607. Response time constant determination section 607 determines a response time constant for transmission power control from the set applied environment set value, and outputs time constant information to control data generation section 609. Control data generation section 609 generates control data corresponding to the response time constant (for example, mode information to change the response time constant) to output to frame assembling section 610.

Frame assembling section 610 performs frame assembling using the transmission data, control data corresponding to the response time constant, and TPC command. The transmission data assembled into frames is output to modulation section 611 to be subjected to digital modulation processing, and output to radio section 612. Radio section 612 converts the modulated signal to the radio-frequency signal (RF signal). The RF signal is transmitted to a mobile station via antenna 601.

A mobile station that is a communication terminal apparatus receives the radio frequency signal (RF signal) via antenna 701 to output to radio section 702. Radio section 702 converts the RF signal to a baseband signal. The baseband signal is demodulated in demodulation section 703, and output to frame disassembling section 704. Frame disassembling section 704 obtains reception data from the demodulated signal.

The TPC command included in the demodulated signal, which is demodulated in demodulation section 703, is input to transmission power control section 707. Transmission power control section 707 generates a control signal to increase or decrease transmission power according to the TPC command, and outputs the control signal to transmission power amplification section 711. Transmission power amplification section 711 performs amplification of the transmission power according to the control signal.

The control data corresponding to the response time constant, frame-disassembled by frame disassembling section 704, is output to control section 705. Control section 705 outputs the control data to response time constant setting section 706. Response time constant setting section 706 sets the response time constant according to the control data, and outputs the set response time constant information and the mode information to transmission power control section 707. Transmission power control section 707 performs the transmission power control, while varying the time constant for the transmission power control according to the response time constant information and mode information as appropriate.

Frame assembling section 708 performs frame assembling using the transmission data. The transmission data assembled into frames is output to modulation section 709 to be subjected to the digital modulation processing, and output to radio section 710. Radio section 710 converts the modulated signal to the radio frequency signal (RF signal). The RF signal, of which the transmission power is amplified, is transmitted to a base station via antenna 701.

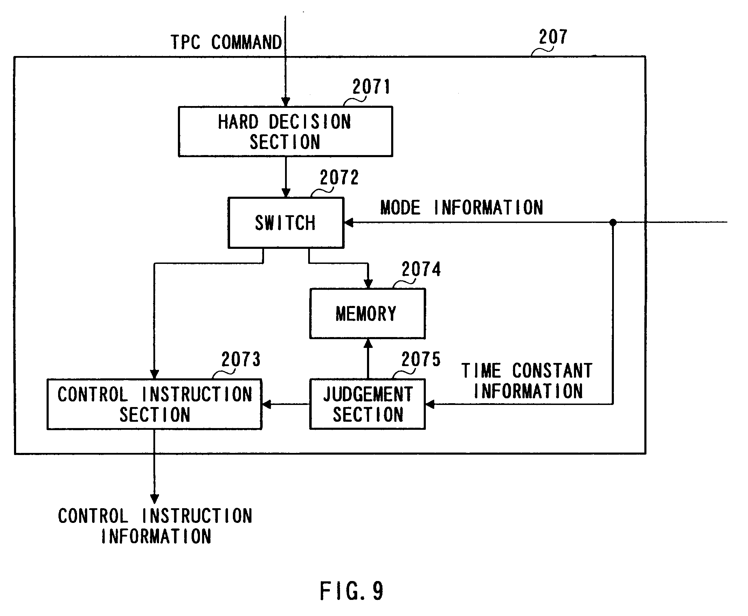

Transmission power control section 207 of the mobile station with the above-described configuration has, as shown in FIG.9, hard decision section 2071 that makes a hard decision on TPC command that is demodulated soft-decision data, switch 2072 that performs switching to output the hard-decision data of TPC command to control instruction section 2073 or memory 2074, judgement section 2075 that judges whether or not the control is needed according to the time constant information, control instruction section 2073 that performs control instruction to the transmission power amplification section, and memory 2074 that stores the hard-decision data of TPC command.

The transmission power control according to this embodiment is next explained. In this transmission power control, the response time constant information is transmitted from the base station to the mobile station, and the mobile station performs uplink transmission power control with the response time constant.

First, the processing that the base station side sets the applied environment and determines the response time constant from the applied environment is performed in the same way as in Embodiment 1. In the mobile station, when the control data generated in the base station side is input to response time constant setting section 706, response time constant setting section 706 sets the response time constant according to the control data.

At this point, in the case where response time constant setting section 706 sets the response time constant, response time constant setting section 706 generates mode information to make the control mode different from ordinary transmission power control concurrently, while setting the response time constant specifically. The time constant information is output to judgement section 2075 in transmission power control section 207, and the mode information is output to switch 2072 in transmission power control section 207.

Meanwhile, the TPC command demodulated in demodulation section 703 as soft-decision data is output to hard decision section 2071 in transmission power control section 207. Hard decision section 2071 makes a hard decision on the soft-decision data of TPC command to obtain the hard-decision data. The hard-decision data is output to control instruction section 2073 or memory 2074. This switching is performed by switch 2072 corresponding to the mode information. In other words, switch 2072 performs the switching so that the hard-decision data of TPC command is output to control instruction section 2073 in the ordinary transmission power mode, and the hard-decision data of TPC command is output to memory 2074 in the transmission power control mode with the changed response time constant.

The hard-decision data of TPC command is stored in memory 2074. The time constant information is input to judgement section 2075, and judgement section 2075 judges whether or not the transmission power control is needed, and whether the transmission power is increased or decreased, while referring to the TPC command stored in memory 2074 according to the set response time constant. Further, judgement section 2075 outputs the information indicative of need or no need of transmission power control and information indicative of increase or decrease of transmission power to control instruction section 2073 according to the response time constant.

For example, when the response time constant is changed to every 5 slots, judgement section 2075 outputs the information (TPC=0) to instruct to maintain the transmission power in the first four slots of 5 slots (control unit) to control instruction section 2073. When the hard decisions of the TPC commands of all the five slots are "1" indicative of increase, judgement section 2075 outputs the information (TPC=1) to instruct to increase the transmission power in the fifth slot to control instruction section 2073. Further, when the hard decisions of the TPC commands of all the five slots are "0" indicative of decrease, judgement section 2075 outputs the information (TPC=-1) to instruct to decrease the transmission power in the fifth slot to control instruction section 2073. Furthermore, judgement section 2075 outputs the information (TPC=0) to instruct to maintain the transmission power in other cases.

Control instruction section 2073 performs the control instruction to transmission power amplification section 711 according to the TPC command for each slot in the ordinary transmission power control mode, and performs the control instruction to transmission power amplification section 711 at the changed response time constant in the mode with the changed time constant.

As described above, in the transmission power control according to this embodiment, the mobile station performs the control corresponding to the response time constant information transmitted from the base station. In this embodiment, it is thus possible to perform the adaptive control corresponding to the propagation environment so that the time constant for the transmission power control is increased when the variation of the propagation path is small, and that the time constant for the transmission power control is decreased when the variation of the propagation path is large.

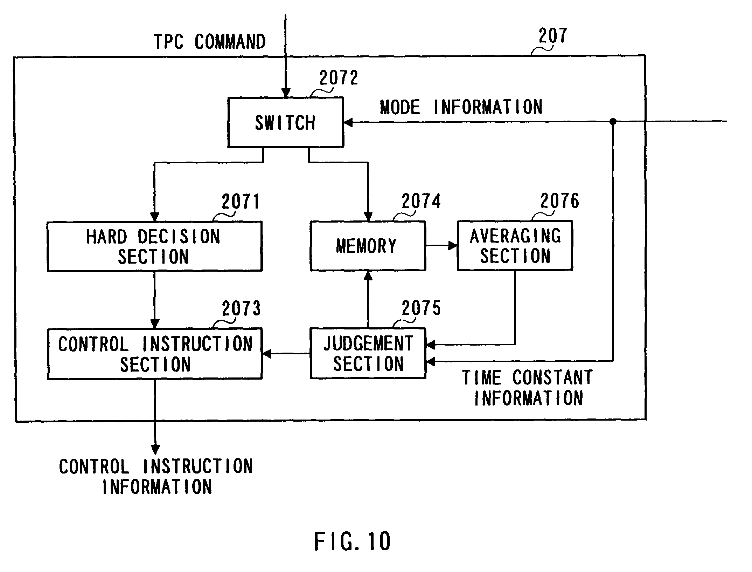

In the transmission power control according to this embodiment, as shown in FIG.10, it may be possible that transmission power control section 207 is provided with averaging section 2076 that averages the soft-decision data, and based on the averaged value of the soft-decision data, the information indicative of need or no need of the transmission power control and information indicative of increase or decrease of transmission power is output to control instruction section 2073.

In other words, in the ordinary transmission power control mode, hard decision section 2071 makes a hard decision on the soft-decision data of TPC command, and according to the hard-decision data of TPC command, control instruction section 2073 performs the control instruction to transmission power amplification section 711. In the mode with the changed response time constant, the soft-decision data of TPC command is stored in memory 2074, averaging section 2076 averages the stored soft-decision data, judgement section 2075 generates the information indicative of need or no need of transmission power control and information indicative of increase or decrease of transmission power using the averaged soft-decision data to output to control instruction section 2073, and based on such information, control instruction section 2073 performs the control instruction to transmission power amplification section 711.

Also in this case, based on the mode information, switch 2072 performs the switching for the soft-decision data of TPC command to output to hard decision section 2071 or memory 2074.

It is also possible in this case to perform the adaptive control corresponding to the propagation environment so that the time constant for the transmission power control is increased when the variation of the propagation path is small, and that the time constant for the transmission power control is decreased when the variation of the propagation path is large.

In addition, the number of slots for use in changing the response time constant is not limited to the particular number.

### (Embodiment 6)

This embodiment also describes the case that a mobile station side controls the response time constant. In this transmission power control, a base station transmits applied environment information to a mobile station, and the mobile station determines the response time constant using the applied environment information and the state of the instruction to increase or decease indicated by the transmission power control commands described in Embodiment 4, and performs uplink transmission power control using the response time constant.

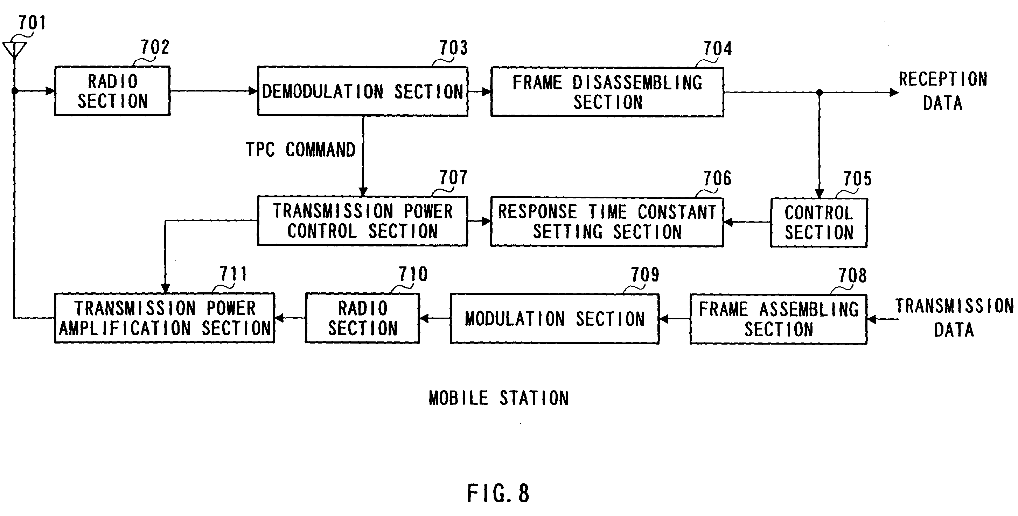

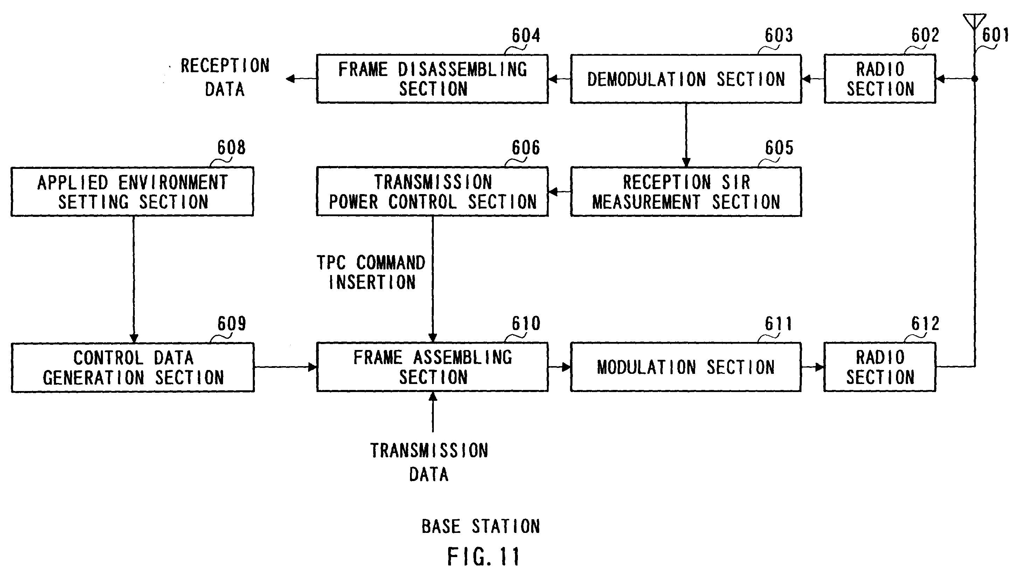

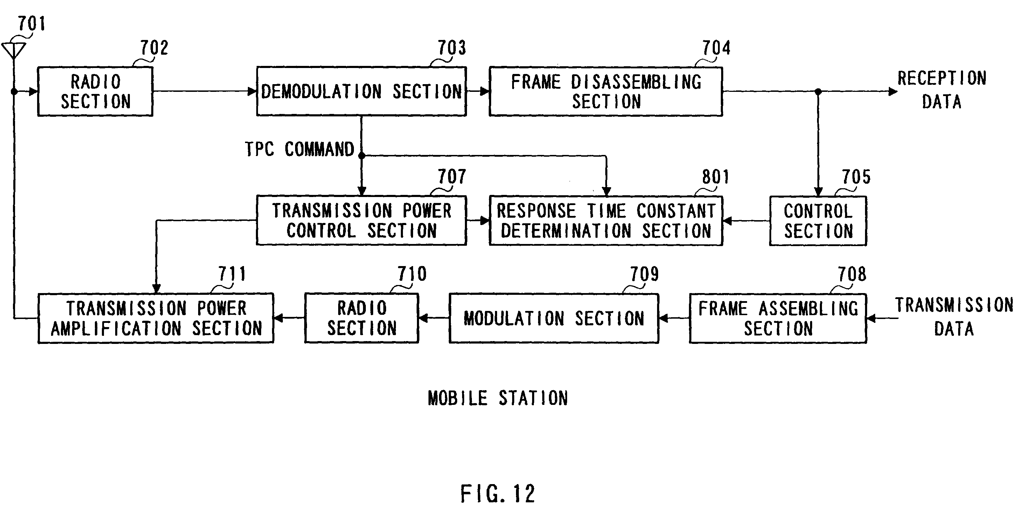

FIG. 11 is a block diagram showing a configuration of a base station apparatus according to Embodiment 6 of the present invention. FIG.12 is a block diagram showing a configuration of a mobile station apparatus according to Embodiment 6 of the present invention. In FIGS.11 and 12, the parts with the same configuration as that of the base station shown in FIGS.7 and 8 are assigned the same codes as those in FIGS.7 and 8, and their explanations are omitted.

The base station apparatus shown in FIG.11 has the configuration obtained by deleting the response time constant determination section from the base station shown in FIG.7. In this base stations the applied environment information set in applied environment setting section 608 is output to control data generation section 609, and control data generation section 609 outputs control data indicative of the applied environment information to frame assembling section 610. The applied environment information is thus transmitted to the mobile station with the transmission data.

The mobile station shown in FIG.12 has the configuration obtained by replacing the response time constant setting section with response time constant determination section in the mobile station shown in FIG.8. In this mobile station, the applied environment information and transmission power control command is input to response time constant determination section 801. Response time constant determination section 801 determines the response time constant according to the applied environment information and the state of the instruction to increase or decease indicated by the transmission power control commands. The method of determining the response time constant is the same as in Embodiment 4.

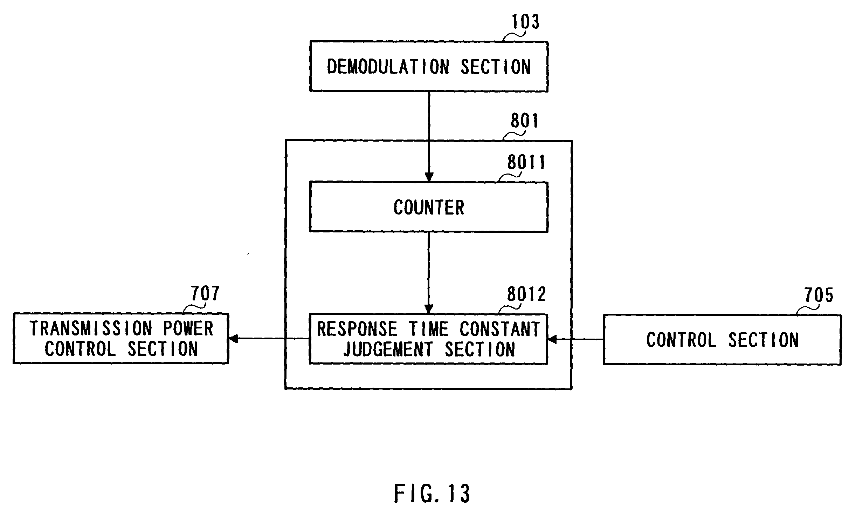

Namely, as shown in FIG.13, response time constant determination section 801 counts the number of transmission power control commands outputted from demodulation section 103, and outputs the counted result (the number of counts) to response time constant judgement section 8012. Response time constant judgement section 8012 judges the status of the variation of the propagation path based on the counted result for the number of transmission power control commands. For example, in the case where orders to "increase" or "decrease" are detected successively, it is judged that the period of the propagation path variation is slow in the environment.

Response time constant determination section 801 determines the response time constant for the transmission power control based on the applied environment information and propagation path variation information obtained by the transmission power control command. Using the response time constant, the downlink transmission power control is performed in the same way as in Embodiment 1. Thus, since the response time constant is determined using the applied environment information and propagation path variation information obtained by the transmission power control command, it is possible to determine the response time constant more accurately, and to perform accurate transmission power control with the response time constant changed.

Further, response time constant determination section 801 outputs the time constant information and mode information to transmission power control section 707 in the same way as in Embodiment 5.

The transmission power control operation in transmission power control section 707 is the same as in Embodiment 5. In other words, the processing is performed in the configuration shown in FIG.9 in such a manner that the TPC command of soft-decision data is subjected to hard decision, the hard-decision data is stored in the memory, and the control instruction is performed every predetermined slots (control unit) (i.e., once every predetermined slots) corresponding to the response time constant. Further, the processing is performed in the configuration shown in FIG.10 in such a manner that the soft-decision data of TPC commands of predetermined slots (control unit) is averaged corresponding to the response time constant, and based on the averaged data, the control instruction is performed once every predetemined slots.

Also in this embodiment, it is possible to perform the adaptive control corresponding to the propagation environment so that the time constant for the transmission power control is increased when the propagation path does not vary, and that the time constant for the transmission power control is decreased when the propagation path varies.

As explained above, the base station apparatus of the present invention comprises a section that allows a response time constant for a transmission power control command transmitted from the transmission/reception apparatus of the other end of communication to be variable according to the applied environment, and thus can change the response time constant for the command on the installed base station side without changing the method of determining the transmission power control command by the transmission/reception apparatus of the other end of communication, implementing closed-loop type transmission power control suitable for the applied environment.

The present invention is not limited to the above described embodiments, and various variations and modifications may be possible without departing from the scope of the present invention.

This application is based on the Japanese Patent Application No.HEI 11-044686 filed on February 23, 1999, entire content of which is expressly incorporated by reference herein.

## Claims

1. A base station apparatus comprising:
a demodulation section(102) that demodulates a transmission power control command included in a reception signal;
an applied environment setting section(109) that sets the environment in which the base station apparatus is installed; and
a response time constant determining section(105) that determines a response time constant for said transmission power control command according to said set installation environment.

2. The base station apparatus according to claim 1, wherein the reception signal is a TDMA-based signal.

3. The base station apparatus according to claim 1, further comprising a measurement section that measures the number of said transmission power control commands by type, wherein said applied environment setting section(109) sets the installation environment of the base station apparatus based on this measurement result.

4. The base station apparatus according to claim 1, wherein said response time constant determining section(105) determines at least one of the control cycle and control step.

5. A communication terminal apparatus carrying out a radio communication with a base station apparatus, said base station apparatus comprising:
a demodulation section(102) that demodulates a transmission power control command included in a reception signal;
an applied environment setting section(109) that sets the environment in which the base station apparatus is installed; and
a response time constant determining section(105) that determines a response time constant for said transmission power control command according to said set installation environment.

6. A mobile station apparatus comprising:
a demodulation section(703) that demodulates a transmission power control command included in a reception signal; and
a transmission power control section(707) that performs transmission power control using said transmission power control command according to response time constant information included in said reception signal.

7. The mobile station apparatus according to claim 6, wherein when same transmission power commands are obtained successively for a predetermined control unit, the transmission power control section performs the transmission power control once every said predetermined control unit according to said transmission power control command.

8. The mobile station apparatus according to claim 6, wherein the transmission power control section performs the transmission power control once every said predetermined control unit using an averaged value of transmission power commands obtained for said predetermined control unit.

9. A mobile station apparatus comprising:
a demodulation section(703) that demodulates a transmission power control command included in a reception signal;
a response time constant determining section(706) that determines a response time constant for said transmission power control command according to installation environment information included in said reception signal; and
a transmission power control section(707) that performs transmission power control using said transmission power control command.

10. A radio communication method comprising:
the demodulating step of demodulating a transmission power control command included in a reception signal;
the applied environment setting step of setting the environment in which the base station apparatus is installed; and
the response time constant determining step of determining a response time constant for said transmission power control command according to said set installation environment.

11. The radio communication method according to claim 10, wherein the reception signal is a TDMA-based signal.

12. The radio communication method according to claim 10, further comprising the measurement step of measuring the number of said transmission power control commands by type, wherein said applied environment setting step sets the installation environment of the base station apparatus based on this measurement result.
